# EUROPEAN PATENT APPLICATION

(11) **EP 4 498 609 A1**
(43) Date of publication of application: **29.01.2025**
(21) Application number: 24731230.9
(22) Date of filing: 14.06.2024
(51) Int. Cl.: H04B 1/04, H04B 1/18, H04B 1/40, H01Q 5/335, H01Q 1/24, H04M 1/02

(54) **ELECTRONIC DEVICE COMPRISING ANTENNA AND WIRELESS COMMUNICATION METHOD USING ANTENNA**

(30) Priority: 16.06.2023 KR 20230077568; 19.07.2023 KR 20230093885
(71) Applicant: Samsung Electronics Co., Ltd, Suwon-si, Gyeonggi-do 16677 (KR)
(72) Inventor: KANG, Youngjin, Suwon-si, Gyeonggi-do 16677 (KR); KIM, Hyunsoo, Suwon-si, Gyeonggi-do 16677 (KR); PARK, Daehee, Suwon-si, Gyeonggi-do 16677 (KR); JANG, Joonwon, Suwon-si, Gyeonggi-do 16677 (KR)
(74) Representative: HGF
(86) International application number: PCT/KR2024/008229
(87) International publication number: WO 2024/258232

(57) **Abstract**

An electronic device according to an embodiment disclosed in the present disclosure may include a housing including a first housing part and a second housing part, a flexible display, an actuator configured to move the second housing part relative to the first housing part, a first antenna that performs wireless communication using a first part of a side frame of the first housing part, a second antenna that performs wireless communication using a second part of the side frame of the first housing part, a sensor module that detects movement of the first housing part or the second housing part 240, a communication circuit that transmits/receives a wireless signal through the first antenna or the second antenna, and a processor that changes a tune code of a tuner included in each of the first antenna and the second antenna based on an extension distance of the display. Another embodiment recognized from the description can be implemented.

## Description

### TECHNICAL FIELD

The embodiments disclosed in the present disclosure relate to an electronic device including an antenna and a wireless communication method using an antenna.

### BACKGROUND ART

Electronic devices (or mobile communication devices) such as smartphones and tablet PCs may perform wireless communication through an antenna. Electronic devices may include a plurality of antennas to support wireless communication signals of various bands. Recently, foldable electronic devices and rollable or slidable electronic devices have been released.

Electronic devices for performing wireless communication may employ an aperture tuner and an antenna impedance tuner (AIT) to improve the performance of an antenna. For example, the aperture tuner and impedance tuner of a typical bar-type mobile electronic device may be configured to be optimized according to a communication band supported by an antenna. The aperture tuner may perform a relatively wide range of tuning, and the impedance tuner may perform a relatively narrow range of tuning.

Meanwhile, displays include various conductive materials, and thus may significantly affect the operation of a surrounding antenna. For example, in the case of foldable electronic devices, a tune code of the aperture tuner may be differently applied according to a folded state and an unfolded state so as to prevent the performance of wireless communication from deteriorating due to a change in the size of a display.

### DISCLOSURE OF THE INVENTION

### TECHNICAL SOLUTION

An electronic device according to an embodiment may include: a housing including a first housing part and a second housing part configured to movably engage with the first housing part between a retracted position and an extended position; a flexible display coupled to the first housing part and the second housing part so that a size of a region visible from a front side of the housing changes as the housing moves between the retracted position and the extended position; an actuator configured to move the second housing part relative to the first housing part; a first antenna that performs wireless communication using a first part of a side frame of the first housing part; a second antenna that performs wireless communication using a second part of the side frame of the first housing part; a sensor module that detects movement of the first housing part or the second housing part; a communication circuit that transmits/receives a wireless signal through the first antenna or the second antenna; and a processor that changes a tune code of a tuner included in each of the first antenna and the second antenna based on an extension distance of the display.

An electronic device according to an embodiment disclosed in the present disclosure may include: a housing including a first housing part and a second housing part, a flexible display having a display region that is reduced or extended in response to a sliding operation of the first housing part and the second housing part, a first antenna that performs wireless communication using a first part of a side frame of the first housing part, a second antenna that performs wireless communication using a second part of the side frame of the first housing part, a sensor module that detects the sliding operation of the first housing part or the second housing part, a communication circuit that transmits/receives a wireless signal through the first antenna or the second antenna, and a processor that changes a tune code of a tuner included in each of the first antenna and the second antenna at different times based on an extension distance of the display.

An electronic device according to an embodiment disclosed in the present disclosure may comprise: a housing including a first housing part and a second housing part; a flexible display having a display region configured to reduce or extend in size in response to relative movement of the first housing part and the second housing part; a first antenna configured to perform wireless communication using a first part of a side frame of the first housing part; a second antenna configured to perform wireless communication using a second part of the side frame of the first housing part; a sensor module configured to detect reduction and extension of the display based on the relative movement of the first housing part and the second housing part; a communication circuit configured to transmit/receive a wireless signal through at least one of the first antenna and the second antenna; and a processor configured to change a first tune code of a first tuner included in the first antenna based on the extension distance of the display and configured to change a second tune code of a second tuner included in the second antenna based on the extension distance of the display; wherein the extension distance at which the first tune code is changed is different to the extension distance at which the second tune code is changed.

A method of an electronic device comprising a communication circuit and a flexible display having a display region configured to reduce or extend in size in response to relative movement of a first housing part and a second housing part of the electronic device according to an embodiment disclosed in the present disclosure may comprise: determine an extension distance of the display when the display region size is reduced or extended; changing, based on the extension distance, a first tune code of a first tuner included in a first antenna configured to perform wireless communication using a first part of a side frame of the first housing part; and changing, based on the extension distance, a second tune code of a second tuner included in a second antenna configured to perform wireless communication using a second part of the side frame of the first housing part; wherein the extension distance at which the first tune code is changed is different to the extension distance at which the second tune code is changed

### BRIEF DESCRIPTION OF THE DRAWINGS

FIG. 1 is a block diagram illustrating an electronic device in a network environment according to various embodiments.
FIGS. 2A and 2B illustrate an electronic device according to an embodiment.
FIG. 3 illustrates an antenna structure formed on a side frame of an electronic device according to an embodiment.
FIG. 4 illustrates a tuner of an antenna according to an embodiment.
FIG. 5 illustrates an antenna operation according to a size change of a display according to an embodiment.
FIG. 6 illustrates changing of tune codes of a plurality of antennas according to an embodiment.
FIG. 7 is a flowchart illustrating a wireless communication method according to an embodiment.

With respect to the description of the drawings, the same or similar reference signs may be used for the same or similar elements.

### MODE FOR CARRYING OUT THE INVENTION

Hereinafter, various embodiments disclosed in the present disclosure will be described with reference to the accompanying drawings. However, this is not intended to limit the present disclosure to the specific embodiments, and it is to be construed to include various modifications, equivalents, and/or alternatives of embodiments of the present disclosure.

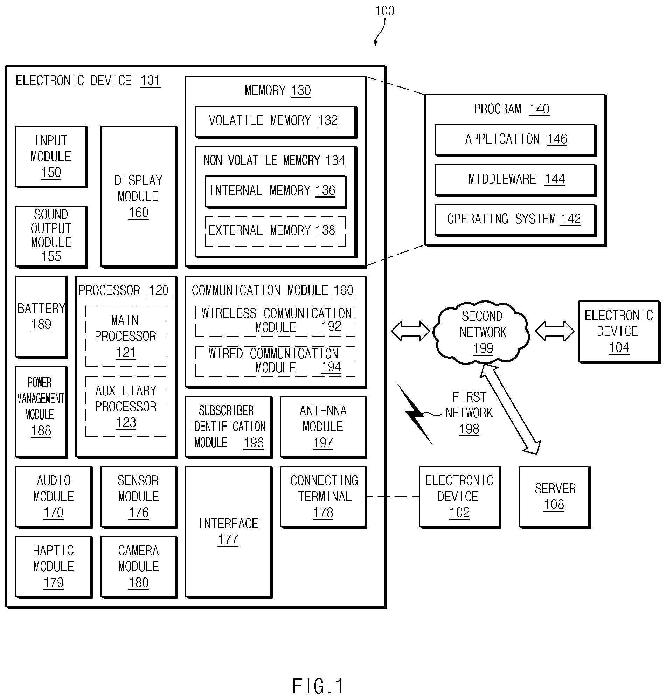

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

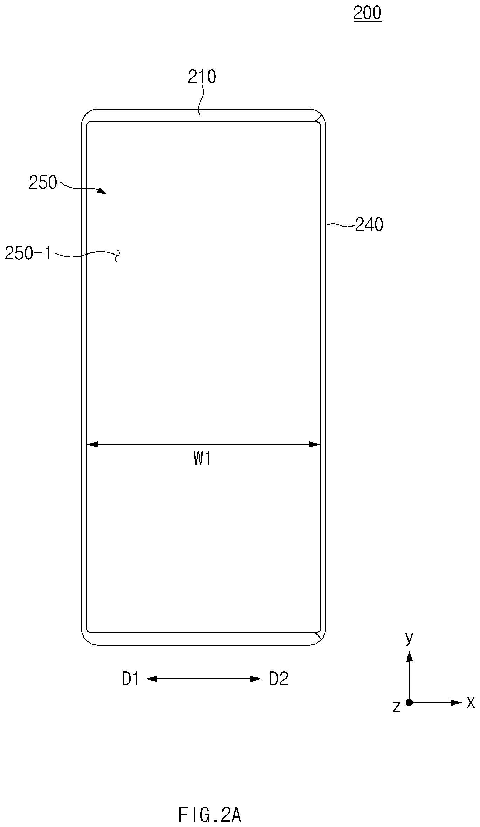

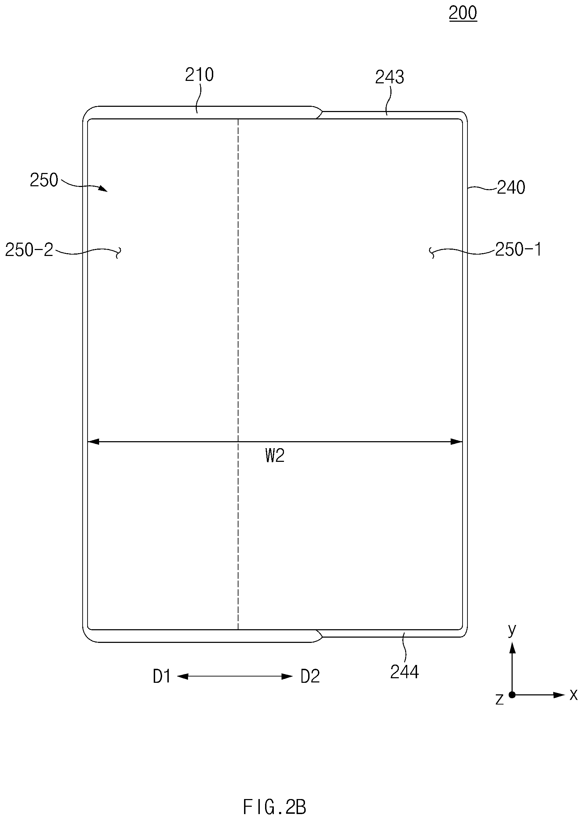

FIGS. 2A and 2B illustrate an electronic device according to an embodiment.

Referring to FIGS. 2A and 2B, an electronic device (e.g., the electronic device 101 of FIG. 1) 200 may be a slidable-type or rollable-type device in which a display is extended. However, it should be appreciated that these are merely examples, and that the electronic device 200 may have any form that allows the physical size of the display region of the electronic device to be expanded and reduced.

The electronic device 200 may include a first housing (or first housing part) 210, a second housing (or second housing part) 240, and the display (or flexible display) (e.g., the display module 160 of FIG. 1) 250.

The first housing 210 and the second housing 240 may be commonly referred to as a "housing", and may include therein various components (e.g., a processor (e.g., the processor 120 of FIG. 1), a memory (e.g., the memory 130 of FIG. 1), a battery (e.g., the battery 189 of FIG. 1), a circuit board, a sensor module (e.g., the sensor module 176 of FIG. 1), a camera module (e.g., the camera module 180 of FIG. 1) required for operating the electronic device 200.

The electronic device (or mobile communication device, mobile electronic device) 200 may operate in one of a first state (e.g., a closed state or reduced mode) (FIG. 2A), a second state (e.g., an open state or extended mode) (FIG. 2B), and a third state (e.g., a partially open state or partially extended mode) between the first state and the second state.

The first state, second state, or third state of the electronic device 200 may be determined according to a position of the second housing 240 relative to the first housing 210. The display 250 may be configured such that a display region may be reduced or expanded in size in response to the relative movement of the first housing 210 and the second housing 240. The electronic device 200 may be deformed to the first state, the second state, or the third state through a user's manipulation or mechanical operation.

The first housing 210 and the second housing 240 may be provided so as to movably engage with each other between a retracted position (first state) and an extended position (second state). The first housing 210 and the second housing 240 may be coupled to each other so as to be able to slide relative to each other. For example, the first housing 210 may be a fixed structure, and the second housing 240 may be a structure capable of sliding relative to the first housing 210. The second housing 240 may be coupled to one side of the first housing 210 so as to be able to slide in one direction (e.g., +x/-x direction) relative to the first housing 210. Although not illustrated in FIG. 2 the electronic device 200 may include an actuator for sliding the first housing 210 or the second housing 240. For example, the electronic device 200 may comprise an actuator configured to move the second housing part relative to the first housing part.

The electronic device 200 may be deformed from the first state to the second state or from the second state to the first state as the second housing 240 slides relative to the first housing 210. For example, since the second housing 240 moves in a second direction D2 relative to the first housing 210 in the first state (FIG. 2A), the electronic device 200 may be deformed from the first state (FIG. 2A) to the second state (FIG. 2B). On the contrary, since the second housing 240 moves in a first direction D1 relative to the first housing 210 in the second state (FIG. 2B), the electronic device 200 may be deformed from the second state (FIG. 2B) to the first state (FIG. 2A).

The first state (FIG. 2A) may be a state in which an area (or size) of the display 250 exposed to a front side of the electronic device 200 is reduced to a minimum. The first state may be a state in which a part of the second housing 240 (e.g., parts 243, 244 oriented in a y+ or y- direction) is accommodated in the first housing 210 and not viewed from the outside. In the first state, a most part of the second housing 240 may overlap the first housing 210. That is, in the first state, a majority of the area of the front surface of the second housing 240 may overlap the area of the front surface of the first housing 210.

The second state (FIG. 2B) may be a state in which the area (or size) of the display 250 exposed to the front side of the electronic device 200 is maximally extended. For example, the second state may be state in which parts 243 and 244 of the second housing 240 are out of the first housing 210. In the second state, the second housing 240 may partially overlap or not overlap the first housing 210. That is, in the second state, a partial area, a minority of the area, or no area of the front surface of the second housing 240 may overlap the area of the front surface of the first housing 210.

Since the first housing 210 and the second housing 240 can be moved between the retracted position (first state) and the extended position (second state), a size of a visible region of the display 250 viewed from the front side of the electronic device 200 may change. For example, the flexible display 250 may be coupled to the first housing 210 and the second housing 240 so that a size of the display region visible from a front side of the housing changes as the housing moves between the retracted position and the extended position. For example, the size (or area) of the display 250 that can be viewed from the front side of the electronic device 200 (i.e. a display region) may change in response to a sliding operation of the second housing 240.

An exposed region (or display region) of the display 250 may extend or reduce in size in response to a sliding operation of the second housing 240 in a state of being supported by at least one of the first housing 210 or the second housing 240. That is, the display 250 (or the display region) may be supported by at least one of the first housing or the second housing. The display 250 may at least partially include a flexible part. That is, at least part of the display 250 may be flexible so that a display region can reduced or extended in size when the housing is manipulated (for example, when there is relative movement of the first housing part 210 and the second housing part 240).

The display 250 may include a basic region 250-1 and an extension region 250-2 extended from the basic region 250-1. The basic region 250-1 may maintain a state of being exposed to the front side of the electronic device 200. An area of the extension region 250-2 exposed to the front side of the electronic device 200 may vary according to a state of the electronic device 200. The extension region 250-2 may be extended from one side (e.g., +x direction) of the basic region 250-1. For example, the basic region 250-1 may represent a partial region of the display 250 visually exposed to the front side of the electronic device 200 in the first state. The extension region 250-2 may represent a region of the electronic device 200 which is not viewable from the front side of the electronic device 200 (for example, by being positioned inside the electronic device 200 or behind first housing 210) in the first state and which is at least partially visually exposed to the front side of the electronic device 200 (for example, by coming out of the electronic device 200 or coming out from behind the first housing 210) in the second state.

The first state (FIG. 2A) may be a state in which the basic region 250-1 forms the front side of the electronic device 200 and the extension region 250-2 is positioned inside (or behind) the first housing 210. The second state (FIG. 2B) may be a state in which at least a part of the extension region 250-2 forms the front side of the electronic device 200 together with the basic region 250-1. Since the extension region 250-2 is additionally exposed to the front side of the electronic device 200 in the second state, an exposed area of the display 250 may increase.

The display 250 may be visually exposed to the front side of the electronic device 200 (i.e. visible to a user looking at the front side of the electronic device 200) and may display predetermined visual information (or screen). For example, in the first state (FIG. 2A), the display 250 may display visual information through the basic region 250-1. In the second state (FIG. 2B), the display 250 may display visual information through a part of the extension region 250-2 and the basic region 250-1. In the second state, the electronic device 200 may also display content on a part of the extension region 250-2 along with the basic region 250-1, and may provide a further extended screen display region than in the first state.

In the first state, an exposed region size of the display 250 may be a first size. In the second state, an exposed region size of the display 250 may be second size larger than the first size. For example, a width of the display 250 forming the exposed region in the first state may be a first width W1, and a width of the display 250 forming the exposed region in the second state may be a second width W2. The first size and the first width W1 may be a minimum size of the exposed region and a minimum width of the display 250, respectively. The second size and the second width W2 may be a maximum size of the exposed region and a maximum width of the display 250, respectively.

The electronic device 200 may operate in the third state that is an arbitrary intermediate state between the first state (FIG. 2A) and the second state (FIG. 2B). In the third state, the width of the display 250 forming the exposed region may be larger than the first width W1 and less than the second width W2.

According to an embodiment, the electronic device 200 may include therein a sensor, which detects an extension distance (or a sliding distance or other relative movement between the first housing 210 and the second housing 240) of the display 250. The sensor may detect or measure information indicative of relative movement of the first housing 210 and second housing 240 and/or an extension distance and a processor (e.g. processor 120) may determine the extension distance based on the information obtained through the sensor. For example, the sensor may be arranged adjacent to a multi-joint structure formed on a rear surface of the display 250. The sensor may measure the extension distance of the display 250 by detecting movement or rotation of the multi-joint structure. The electronic device 200 may measure the extension distance of the display 250 and control operation of an antenna formed using a side frame of the first housing 210 according to the measured extension distance. However, it will be appreciated that this is merely an example, and that the electronic device may comprise any sensor type and/or arrangement suitable for sensing information indicative of an extension distance.

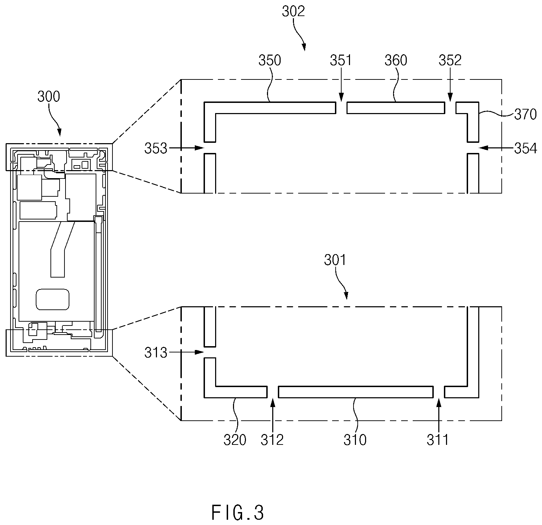

FIG. 3 illustrates an antenna structure formed on a side frame of an electronic device according to an embodiment. The illustration of FIG. 3 is merely an example, and embodiments of the present disclosure are not limited thereto.

Referring to FIG. 3, a side frame 300 of an electronic device (e.g., the electronic device 101 of FIG. 1, the electronic device 200 of FIGS. 2A and 2B) may be used as an antenna radiator. The side frame 300 may include a first frame part 301 and a second frame part 302.

The first frame part 301 may be arranged at a lower end of the electronic device (e.g., the electronic device 101 of FIG. 1, the electronic device 200 of FIGS. 2A and 2B), and may include a plurality of conductive members (or parts or areas) and a plurality of non-conductive members (or parts or areas) arranged between the plurality of conductive members. For example, as illustrated in FIG. 3, the first frame part 301 may include a first conductive part 310 and a second conductive part 320. Segmentation parts 311, 312, and 313 may be formed on both ends of the first conductive part 310 and the second conductive part 320, and a non-conductive member may be arranged in each of the segmentation parts. That is, a non-conductive member or area may be arranged at each end of each of the first conductive part 310 and second conductive part 320. The same non-conductive member or area may be arranged between one end of the first conductive part 310 and one end of the second conductive part 320 (i.e. arranged in segmentation part 312).

The second frame part 302 may be arranged at an upper end of the electronic device (e.g., the electronic device 101 of FIG. 2, the electronic device 200 of FIGS. 2A and 2B), and may include a plurality of conductive members (or parts or areas) and a plurality of non-conductive members (or parts or areas) arranged between the plurality of conductive members. For example, as illustrated in FIG. 3, the second frame part 302 may include a third conductive part 350, a fourth conductive part 360, and a fifth conductive part 370. Segmentation parts 351, 352, 353, and 354 may be formed on both ends of the third conductive parts 350, the fourth conductive parts 360, and the fifth conductive parts 370, and a non-conductive member may be arranged in each of the segmentation parts. That is, a non-conductive member or area may be arranged at each end of each of the third conductive part 350, fourth conductive part 360, and fifth conductive part 370. The same non-conductive member or area may be arranged between one end of the third conductive part 350 and one end of the fourth conductive part 360 (i.e. arranged in segmentation part 351). The same non-conductive member or area may be arranged between one end of the fourth conductive part 360 and one end of the fifth conductive part 370 (i.e. in segmentation part 352).

It will be appreciated that the above arrangement of conductive parts is merely an example, and that the plurality of conductive members and the plurality of non-conductive members arranged between the plurality of conductive members may be included in any suitable location in the housing of the electronic device (e.g., the electronic device 101 of FIG. 1, the electronic device 200 of FIGS. 2A and 2B). For example, at least one of the first housing part 210 and the second housing part 240 may include a plurality of conductive members and a plurality of non-conductive members arranged between the plurality of conductive members.

Each of the conductive parts may be used by (or as part of) an antenna. For example, a first antenna may be configured to transmit/receive a wireless signal using a first conductive member among the plurality of conductive members, and a second antenna may be configured to transmit/receive a wireless signal using a second conductive member among the plurality of conductive members.

The plurality of conductive members used by (or as part of) the antennas may be arranged on the same side surface of the electronic device (e.g., the electronic device 101 of FIG. 1, the electronic device 200 of FIGS. 2A and 2B). For example, the first conductive member and the second conductive member used by the first and second antennas, respectively, may be arranged on the same side surface of the electronic device.

The antenna using each of the conductive parts may transmit/receive a signal of a specified band.

When a size of a display (e.g., the display module 160 of FIG. 1, the display 250 of FIGS. 2A and 2B) or display region of the electronic device (e.g., the electronic device 101 of FIG. 1, the electronic device 200 of FIGS. 2A and 2B) is increased or reduced, arrangement of a conductive structure and electrical structure around each antenna may be changed. For example, communication performance of the antenna may deteriorate since resonance around the antenna changes due to movement of the display. The electronic device may change a tune code applied to a tuner included in each antenna in accordance with an extension or reduction distance of an extending display. For example, a first tune code of a first tuner included in a first antenna may be changed based on an extension distance of the display and a second tune code of a second tuner included in a second antenna may be changed based on an extension distance of the display. The extension distance at which the first tune code is changed is different to the extension distance at which the second tune code is changed. For example, for a first antenna using the first conductive part 310, the electronic device may change the first tune code based on a first threshold value reflecting the extension or reduction distance of the display. For example, the electronic device may change the first tune code from a first code set to a second code set when an extension of the display causes the extension distance to exceed a first threshold value and may change the first tune code from the second code set to the first code set when a reduction of the display causes the extension distance to fall below the first threshold value. For a second antenna using the second conductive part 320, the electronic device 320 may change the second tune code based on a second threshold value larger than the first threshold value. For example, the electronic device may change the second tune code from a third code set to a fourth code set when an extension of the display causes the extension distance to exceed a second threshold value and may change the second tune code from the fourth code set to the third code set when a reduction of the display causes the extension distance to fall below the second threshold value. Additional information about changing the tune code of an antenna tuner according to the extension distance of the display is provided below through the drawings.

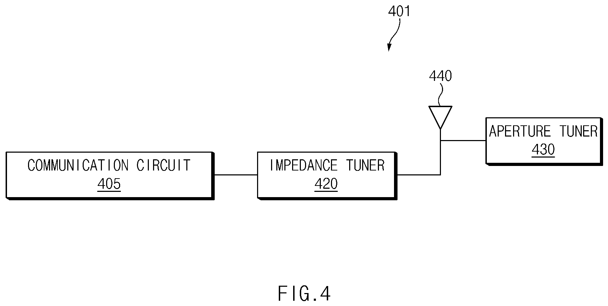

FIG. 4 illustrates a tuner of an antenna according to an embodiment.

Referring to FIG. 4, an antenna module (or antenna device) 401 may include a communication circuit 405, an impedance tuner 420, an aperture tuner 430, and a radiator 440. The impedance tuner 420 and/or the aperture tuner 430 may be commonly referred to as an "antenna tuner".

The communication circuit 405 may be configured to transmit and/or receive a wireless communication signal through the antenna (e.g. via the radiator). The communication circuit 405 may process a wireless communication signal received through the radiator 440. The communication circuit 405 may control elements in the impedance tuner 420 and/or the aperture tuner 430.

According to an embodiment, the communication circuit 405 may include therein a non-volatile memory or storage element. The communication circuit 405 may include at least one tune code related to control of the aperture tuner 430. For example, the at least one tune code may be stored in the non-volatile memory or storage element. The communication circuit 405 may be configured to change a tune code in response to receiving a control signal from a processor (e.g. processor 120 of FIG. 1). For example, the communication circuit 405 may receive information about the extension distance of the display from a processor (e.g., the processor 120 of FIG. 1). The communication circuit 405 may change a tune code applied to the aperture tuner 430 in accordance with the extension distance of the display. A state of an element in the aperture tuner 430 may be changed according to the changed tune code.

The impedance tuner 420 may adjust impedance characteristics of the antenna module 401. For example, the impedance tuner 420 may include at least one capacitor, at least one inductor, at least one resistor, and/or at least one switch. The impedance tuner 420 may add/subtract impedance required for minimizing a reflection coefficient between a signal processing path and the radiator 440. The impedance tuner 420 may be referred to as an "impedance matching circuit". The impedance tuner 420 may perform precise tuning on a wireless communication signal processed through the aperture tuner 430. The impedance tuner 420 may perform a narrower range of tuning than that of the aperture tuner 430. For example, after the aperture tuner 430 performs tuning, the impedance tuner 420 may perform additional tuning based on a closed loop scheme.

The aperture tuner 430 may adjust characteristics of the radiator 440. The aperture tuner 430 may include at least one capacitor, at least one inductor, at least one resistor, and/or at least one switch. The aperture tuner 430 may be connected to the radiator 440 in a different direction from a signal processing path of the impedance tuner 420, and may add/subtract circuit characteristics required for optimizing a resonance frequency of the radiator 440. The aperture tuner 430 may perform a wider range of tuning than that of the impedance tuner 420.

According to an embodiment, the aperture tuner 430 may change an operation state of an internal element according to a tune code transmitted from the communication circuit 405. For example, the aperture tuner 430 may include a plurality of switches and a variable capacitor, and may be configured to change a state of the variable capacitor and/or the plurality of switches in accordance with the tune code. The aperture tuner 430 may operate with a first code set transmitted from the communication circuit 405. The first code set may correspond to the first state (e.g., a closed state or reduced mode) of the electronic device. The aperture tuner 430 may change a state of the switches and/or set a value of the variable capacitor according to the first code set. A second code set may be received from the communication circuit 405 as the display is extended. The second code set may correspond to the second state (e.g., an open state or extended mode) of the electronic device. The aperture tuner 430 may change a state of the switches and/or set a value of the variable capacitor according to the second code set.

The radiator 440 may transmit/receive a wireless communication signal. The radiator 440 may form an electrical path for wireless communication. The radiator 440 may be a conductor for radiating or detecting a wireless communication signal. The radiator 440 may have a shape corresponding to a frequency of a signal to be processed, and may be arranged at a particular position in the electronic device (e.g., the electronic device 101 of FIG. 1, the electronic device 200 of FIGS. 2A and 2B). For example, the radiator 440 may be a conductive part such as one of the plurality of conductive parts (e.g. conductive parts 310, 320, 350, 360, 370) constituting the side frame of FIG. 3.

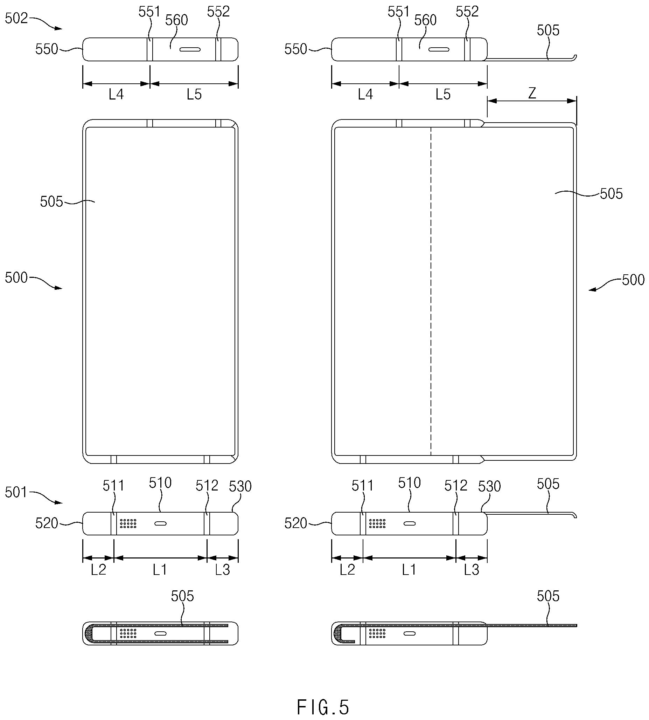

FIG. 5 illustrates an antenna operation according to a size change of a display according to an embodiment.

Referring to FIG. 5, an electronic device (e.g., the electronic device 101 of FIG. 1, the electronic device 200 of FIGS. 2A and 2B) 500 may be a slidable-type or rollable-type device in which a display 505 (e.g., the display module 160 of FIG. 1, the display 250 of FIGS. 2A and 2B) is extended. However, it should be appreciated that these are merely examples, and that the electronic device 500 may have any form that allows the physical size of the display region of the electronic device to be expanded and reduced. The electronic device 500 may operate in one of a first state (e.g., a closed state or reduced mode), a second state (e.g., an open state or extended mode), and a third state (e.g., a partially open state or partially extended mode) between the first state and the second state.

As the display 505 is extended, arrangement of a conductive structure or electrical structure around an antenna included in the electronic device 500 may change, and, accordingly, resonance characteristics of the antenna may change. In order to maintain stable wireless communication performance, the electronic device 500 may change a tune code of an aperture tuner (e.g., the aperture tuner 430 of FIG. 4) according to a degree of extension of the display 505.

A first frame part (lower frame) 501 may include a first conductive part (or first conductive member) 510, a second conductive part (or second conductive member) 520, a third conductive part (or third conductive member) 530, a first non-conductive member 511, and a second non-conductive member 512. The first conductive part 510 and the second conductive part 520 may be separated from each other through the first non-conductive member 511. The first conductive part 510 and the third conductive part 530 may be separated from each other through the second non-conductive member 512.

The first conductive part 510 may have a first length L1. The second conductive part 520 may have a second length L2. The third conductive part 530 may have a third length L3.

According to an embodiment, a first antenna Main1 may transmit/receive a wireless communication signal using the first conductive part 510. A second antenna Main2 may transmit/receive a wireless communication signal using the second conductive part 520. A third antenna Sub1 may transmit/receive a wireless communication signal using the third conductive part 530.

According to an embodiment, the electronic device 500 may be configured to change at least one tune code by comparing the extension distance with a lengths of at least one conductive part among a plurality of conductive parts (for example, the plurality of conductive parts constituting the side frame). The plurality of conductive parts may be the plurality of conductive parts that are used by (or as part of) the antennas. For example, the electronic device may determine whether to change a tune code of an antenna based on a comparison between the extension distance and the length of at least one conductive part, which may include the conductive part used by that antenna. For example, the electronic device may be configured to change the tune code of a first tuner included in a first antenna based on comparing the extension distance with the length of a first conductive part used by the first antenna, and to change the tune code of a second tuner included in a second antenna based on comparing the extension distance with a length of at least one of the first conductive part and the second conductive part used by the second antenna. For example, comparing the extension distance with a length of a conductive part may comprise determining if the extension distance is larger or smaller than the length of the conductive part, and changing the tune code accordingly.

For example, if a display extension length Z is 0, a pre-stored close code (i.e. a tune code corresponding to the first state) may be applied to each of the first antenna Main1, the second antenna Main2, and the third antenna Sub 1. The electronic device 500 may apply a first close code A1_Roll_Close to an aperture turner of the first antenna Main1, a second close code A2_Roll_Close to an aperture tuner of the second antenna Main2, and a third close code A3_Roll_Close to the third antenna Sub1.

If the display extension length Z is less than the third length L3 of the third conductive part 530 (0 < Z < L3), the electronic device 500 may apply a pre-stored open code (i.e. a tune code corresponding to the second and/or third state) to the third antenna Sub1 using the third conductive part 530, and maintain a close code for each of the first antenna Main1 using the first conductive part 510 and the second antenna Main2 using the second conductive part 520. For example, the electronic device 500 may apply a third open code A3_Roll_Open to the aperture tuner of the third antenna Sub1, and maintain the first close code A1_Roll_Close for the aperture turner of the first antenna Main 1 and the second close code A2_Roll_Close for the aperture tuner of the second antenna Main2.

If the display extension length Z increases and is larger than the third length L3 and less than a sum of the first length L1 and the third length L3 (L3 < Z < (L1+L3)), the electronic device 500 may apply a pre-stored open code to the first antenna Main1 using the first conductive part 510, and maintain a close code for the second antenna Main2 using the second conductive part 520. For example, the electronic device 500 may apply a first open code A1_Roll_Open to the aperture tuner of the first antenna Main1, and maintain the second close code A2_Roll_Close for the aperture tuner of the second antenna Main2.

If the display extension length Z is larger than the third length L3, a void not filled with the display 505 may be formed around the first conductive part 510. Due to a change in a conductive structure around the first conductive part 510, resonance characteristics of the first antenna Main1 using the first conductive part 510 may change. If the first antenna Main1 maintains an existing tune code, the performance of wireless communication using the first antenna Main1 may not be ensured. If the display extension length Z is larger than the third length L3, the electronic device 500 may change a tune code for the first antenna Main1 to an open code so as to change a state of a switch and capacitor in the aperture tuner. In this manner, the performance of wireless communication may be secured with respect to the first antenna Main1.

If the display extension length Z further increases and is larger than the sum of the first length L1 and the third length L3 ((L1+L3) < Z), the electronic device 500 may apply an open code to each of the first antenna Main1 using the first conductive part 510 and the second antenna Main2 using the second conductive part 520. For example, the electronic device 500 may maintain the first open code A1_Roll_Open for the first antenna Main1, and may apply a second open code A2_Roll_Open to the second antenna Main2.

If the display extension length Z is larger than the sum of the first length L1 and the third length L3 ((L1+L3) < Z), a void not filled with the display 505 may also be formed around the second conductive part 520. Due to a change in a conductive structure around the second conductive part 520, resonance characteristics of the second antenna Main2 using the second conductive part 520 may change. If the second antenna Main2 maintains an existing tune code, the performance of wireless communication using the second antenna Main2 may not be ensured. If the display extension length Z is larger than the sum of the first length L1 and the third length L3, the electronic device 500 may change a tune code for the second antenna Main2 to an open code so as to change a state of a switch and capacitor in the aperture tuner. In this manner, the performance of wireless communication may be secured with respect to the second antenna Main2.

A second frame part (upper frame) 502 may include a fourth conductive part (or fourth conductive member) 550, a fifth conductive part (or fifth conductive member) 560, a third non-conductive member 551, and a fourth non-conductive member 552. The fourth conductive part 550 and the fifth conductive part 560 may be separated from each other through the third non-conductive member 551. The fourth conductive part 550 may have a fourth length L4. The second frame part (upper frame) 502 except for the fourth conductive part 550 may have a fifth length L5. A third antenna Sub1 may transmit/receive a wireless communication signal using the fourth conductive part 550.

If the display extension length Z is less than the fifth length L5 (0 < Z < L5), the electronic device 500 may apply a pre-stored close code to the third antenna Sub1 using the fourth conductive part 550. For example, the electronic device 500 may apply a third close code A3_Roll_Close to the aperture tuner of the third antenna Sub1.

If the display extension length Z increases and is larger than the fifth length L5, the electronic device 500 may apply a pre-stored open code to the third antenna Sub1 using the fourth conductive part 550. For example, the electronic device 500 may apply a third open code A3_Roll_Open to the aperture tuner of the third antenna Sub1.

If the display extension length Z is larger than the fifth length L5, a void not filled with the display 505 may be formed around the fourth conductive part 550. Due to a change in a conductive structure around the fourth conductive part 550, resonance characteristics of the third antenna Sub1 using the fourth conductive part 550 may change. If the third antenna Sub1 maintains an existing tune code, the performance of wireless communication using the third antenna Sub1 may not be ensured. If the display extension length Z is larger than the fifth length L5, the electronic device 500 may change a tune code for the third antenna Sub 1 to an open code so as to change a state of a switch and capacitor in the aperture tuner. In this manner, the performance of wireless communication may be secured with respect to the third antenna Sub1.

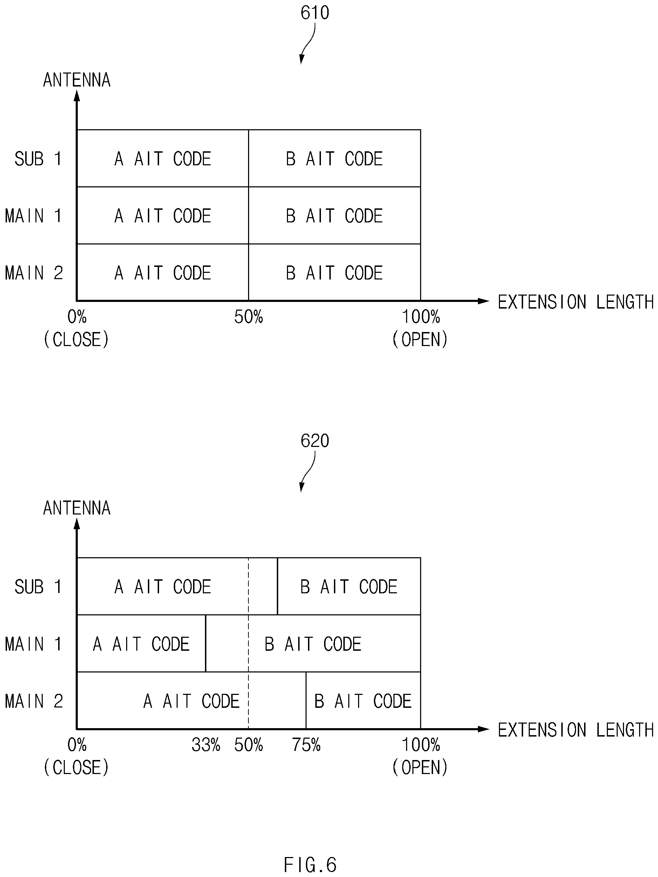

FIG. 6 illustrates changing of tune codes of a plurality of antennas according to an embodiment.

Referring to FIG. 6, a first graph 610 shows that antenna codes are changed at one time in a slidable/rollable electronic device. That is, at a certain extension distance, the tune code of every antenna is changed. In the case of changing at one time, code change equally occurs at a specified extension ratio (e.g., 50 %) for all antennas. In this case, it may be difficult to reflect a ground (GND) condition or a change in an electric object around a conductive part in each antenna. Alternatively, if tune codes are changed more finely than in the first graph 610, load of a communication circuit may increase, and thus the efficiency of wireless communication may decrease.

A second graph 620 shows that antenna tune codes are differently changed according to an extension ratio of a display in a slidable/rollable electronic device. For example, a tune code of the first antenna Main1 may be changed at a first extension ratio (e.g., 33 %). A tune code of the third antenna Sub1 may be changed at a second extension ratio (e.g., 63 %). A tune code of the second antenna Main2 may be changed at a third extension ratio (e.g., 75 %).

Two tune codes may be pre-stored for each antenna in the slidable/rollable electronic device. Timing for switching a tune code of an antenna may be determined according to a length of a conductive part used by each antenna, a position of the conductive part, and a display extension or reduction length. In this manner, at least a certain degree of antenna performance may be constantly maintained regardless of the degree of extension of the display, and the performance of massive data transmission of 5G/6G may be improved.

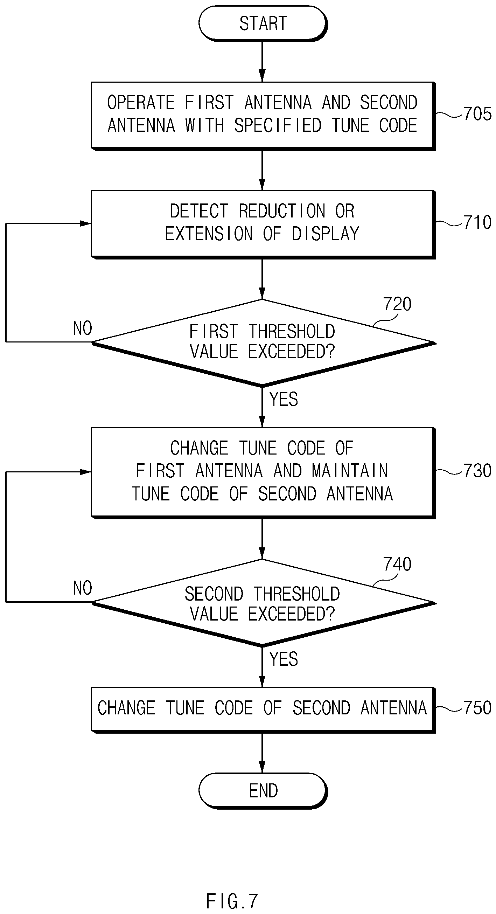

FIG. 7 is a flowchart illustrating a wireless communication method according to an embodiment.

Referring to FIG. 7, in operation 705, a processor (e.g., the processor 120 of FIG. 1) of an electronic device (e.g., the electronic device 101 of FIG. 1, the electronic device 200 of FIGS. 2A and 2B)) may operate a first antenna and a second antenna with a specified tune code. For example, if the electronic device is in a reduced mode, the processor may apply a pre-stored close code to each of the first antenna and the second antenna. For another example, if the electronic device is in an extended mode, the processor may apply a pre-stored open code to each of the first antenna and the second antenna.

In operation 710, the processor may detect reduction or extension of a display (e.g., the display module 160 of FIG. 1, the display 250 of FIGS. 2A and 2B, the display 505 of FIG. 5). The processor may recognize a sliding operation of a housing through a sensor module. The processor may determine an extension distance of the display based on sensing information.

In operation 720, the processor may identify whether the extension or reduction distance of the display exceeds (or is at least) a first threshold value. The first threshold value may be a value associated with a length of conductive parts constituting a side frame of the electronic device.

In operation 730, if the extension or reduction distance of the display exceeds the first threshold value, the processor may change a tune code of the first antenna and maintain a tune code of the second antenna. As the display is extended or reduced, a change in a conductive structure around the first antenna may be relatively large, and a change in a conductive structure around the second antenna may be relatively small. The processor may prevent the performance of wireless communication of the first antenna from deteriorating by changing a tune code applied to the first antenna.

According to an embodiment, if the extension or reduction distance of the display returns to the first threshold value or less after exceeding the first threshold value, the tune code of the first antenna may be restored to a previous state (state of operation 705).

In operation 740, the processor may identify whether the extension or reduction distance of the display exceeds (or is at least) a second threshold value. The second threshold value may be a value that is larger than the first threshold value and associated with a length of conductive parts constituting a side frame of the electronic device.

In operation 750, if the extension or reduction distance of the display exceeds the second threshold value, the processor may change a tune code of the second antenna. As the extension or reduction distance of the display exceeds both the first threshold value and the second threshold value, a change in a conductive structure around the first antenna and the second antenna may be relatively large. The processor may prevent the performance of wireless communication of the first antenna and the second antenna from deteriorating by changing both the tune codes applied to the first antenna and the second antenna.

According to an embodiment, if the extension or reduction distance of the display returns to the second threshold value or less after exceeding the second threshold value, the tune code of the second antenna may be restored to a previous state (state of operation 730).

In the case of a rollable/slidable electronic device, a variation in antenna performance may increase according to the degree of extension of a display. If two tune codes for a closed state and unfolded state are simply applied for a rollable/slidable electronic device as in a foldable electronic device, the antenna performance may deteriorate since the tune codes are not optimized for the degree of extension of a display.

Furthermore, in the case of a rollable/slidable electronic device, it may be difficult to apply, to an actual product, a method of performing optimization of each tuner multiple times in response to extension of a size of a display due to operation delay and processing delay.

There follows a list of embodiments and examples. The invention may comprise any combination of the following embodiments and examples and features thereof, except where such a combination would result in a contradiction.

An electronic device 101, 200, 500 according to an embodiment (for example, a first embodiment) may include: a housing including a first housing part 210 and a second housing part 240 configured to movably engage with the first housing part 210 between a retracted position and an extended position; a flexible display 160, 250, 505 coupled to the first housing part 210 and the second housing part 240 so that a size of a region visible from a front side of the housing changes as the housing moves between the retracted position and the extended position; an actuator configured to move the second housing part 240 relative to the first housing part 210; a first antenna that performs wireless communication using a first part of a side frame of the first housing part 210; a second antenna that performs wireless communication using a second part of the side frame of the first housing part 210; a sensor module 176 that detects movement of the first housing part 210 or the second housing part 240; a communication circuit 190, 405 that transmits/receives a wireless signal through the first antenna or the second antenna; and a processor 120 that changes a tune code of a tuner included in each of the first antenna and the second antenna based on an extension distance of the display 160, 250, 505.

According to an embodiment (for example, a second embodiment based on the first embodiment), the processor 120 may change the tune code by comparing the extension distance with a length of a plurality of conductive parts constituting the side frame.

According to an embodiment (for example, a third embodiment based on any of the first or second embodiments), each of the first antenna and the second antenna may include an impedance tuner 420 and an aperture tuner 430. The aperture tuner 430 may include a variable capacitor and a plurality of switches, and may change a state of the variable capacitor and the plurality of switches in accordance with the tune code.

According to an embodiment (for example, a fourth embodiment based on any of the first to third embodiments), the communication circuit 190, 405 may maintain the tune code of the first antenna and the second antenna when the extension distance of the display 160, 250, 505 is equal to or less than a first threshold value.

According to an embodiment (for example, a fifth embodiment based on the fourth embodiment), the communication circuit 190, 405 may maintain the tune code of the second antenna and change the tune code of the first antenna when the extension distance of the display 160, 250, 505 exceeds the first threshold value and is equal to or less than a second threshold value.

According to an embodiment (for example, a sixth embodiment based on the fifth embodiment), the communication circuit 190, 405 may change the tune code of the second antenna when the extension distance of the display 160, 250, 505 exceeds the second threshold value.

According to an embodiment (for example, a seventh embodiment based on any of the first to sixth embodiments), the first housing part 210 may include a plurality of conductive members and a plurality of non-conductive members arranged between the plurality of conductive members. The first antenna may transmit/receive a wireless signal using a first conductive member among the plurality of conductive members. The second antenna may transmit/receive a wireless signal using a second conductive member among the plurality of conductive members.

According to an embodiment (for example, an eighth embodiment based on any of the first to seventh embodiments), the first conductive member and the second conductive member may be arranged on the same side surface of the electronic device 101, 200, 500.

According to an embodiment (for example, a ninth embodiment based on any of the first to eighth embodiments), the communication circuit 190, 405 may include a non-volatile storage element. The tune code may be stored in the non-volatile storage element.

According to an embodiment (for example, a tenth embodiment based on any of the first to ninth embodiments), the processor 120 may determine the extension distance of the display 160, 250, 505 based on information obtained through the sensor module 176. The processor 120 may transmit a control signal related to changing of the tune code to the communication circuit 190, 405 based on the determined extension distance.

An electronic device 101, 200, 500 according to an embodiment (for example, an eleventh embodiment) may include: a housing including a first housing part 210 and a second housing part 240; a flexible display 160, 250, 505 having a display region that is reduced or extended in response to a sliding operation of the first housing part 210 and the second housing part 240; a first antenna that performs wireless communication using a first part of a side frame of the first housing part 210; a second antenna that performs wireless communication using a second part of the side frame of the first housing part 210; a sensor module 176 that detects the sliding operation of the first housing part 210 or the second housing part 240; a communication circuit 190, 405 that transmits/receives a wireless signal through the first antenna or the second antenna; and a processor 120 that changes a tune code of a tuner included in each of the first antenna and the second antenna at different times based on an extension distance of the display 160, 250, 505.

According to an embodiment (for example, a twelfth embodiment based on the eleventh embodiment), the processor 120 may change the tune code by comparing the extension distance with a length of a plurality of conductive parts constituting the side frame.

According to an embodiment (for example, a thirteenth embodiment based on any of the eleventh or twelfth embodiments), each of the first antenna and the second antenna may include an impedance tuner 420 and an aperture tuner 430. The aperture tuner 430 may include a variable capacitor and a plurality of switches. The aperture tuner 430 may change a state of the variable capacitor and the plurality of switches in accordance with the tune code.

According to an embodiment (for example, a fourteenth embodiment based on any of the eleventh to thirteenth embodiments), the communication circuit 190, 405 may maintain the tune code of the first antenna and the second antenna when the extension distance of the display 160, 250, 505 is equal to or less than a first threshold value.

According to an embodiment (for example, a fifteenth embodiment based on the fourteenth embodiment), the communication circuit 190, 405 may maintain the tune code of the second antenna and change the tune code of the first antenna when the extension distance of the display 160, 250, 505 exceeds the first threshold value and is equal to or less than a second threshold value.

According to an embodiment (for example, a sixteenth embodiment based on the fifteenth embodiment), the communication circuit 190, 405 may change the tune code of the second antenna when the extension distance of the display 160, 250, 505 exceeds the second threshold value.

According to an embodiment (for example, a seventeenth embodiment based on any of the eleventh to sixteenth embodiments), the first housing part 210 may include a plurality of conductive members and a plurality of non-conductive members arranged between the plurality of conductive members. The first antenna may transmit/receive a wireless signal using a first conductive member among the plurality of conductive members. The second antenna may transmit/receive a wireless signal using a second conductive member among the plurality of conductive members.

According to an embodiment (for example, an eighteenth embodiment based on any of the eleventh to seventeenth embodiments), the first conductive member and the second conductive member may be arranged on the same side surface of the electronic device 101, 200, 500.

According to an embodiment (for example, a nineteenth embodiment based on any of the eleventh to eighteenth embodiments), the communication circuit 190, 405 may include a non-volatile storage element. The tune code may be stored in the non-volatile storage element.

According to an embodiment (for example, a twentieth embodiment based on any of the eleventh to nineteenth embodiments), the processor 120 may determine the extension distance of the display 160, 250, 505 based on information obtained through the sensor module 176. The processor 120 may transmit a control signal related to changing of the tune code to the communication circuit 190, 405 based on the determined extension distance.

According to a first example, there is provided an electronic device comprising: a housing including a first housing part and a second housing part; a flexible display having a display region configured to reduce or extend in size in response to relative movement of the first housing part and the second housing part; a first antenna configured to perform wireless communication using a first part of a side frame of the first housing part; a second antenna configured to perform wireless communication using a second part of the side frame of the first housing part; a sensor module configured to detect reduction and extension of the display based on the relative movement of the first housing part and the second housing part; a communication circuit configured to transmit/receive a wireless signal through at least one of the first antenna and the second antenna; and a processor configured to change a first tune code of a first tuner included in the first antenna based on the extension distance of the display and configured to change a second tune code of a second tuner included in the second antenna based on the extension distance of the display; wherein the extension distance at which the first tune code is changed is different to the extension distance at which the second tune code is changed.

According to a second example, there is provided the electronic device of the first example, wherein the processor is configured to change at least one of the first tune code of the first tuner and the second tune code of the second tuner by comparing the extension distance with a length of at least one conductive part among a plurality of conductive parts constituting the side frame.

According to a third example, there is provided the electronic device of any of the first or second examples, wherein each of the first antenna and the second antenna includes an impedance tuner and an aperture tuner, and wherein the aperture tuner includes a variable capacitor and a plurality of switches, and is configured to change a state of the variable capacitor and/or the plurality of switches in accordance with a change of the fist tune code or second tune code.

According to a fourth example, there is provided the electronic device of any of the first to third examples, wherein the communication circuit is configured to maintain the first tune code of the first antenna and the second tune code of the second antenna when the extension distance of the display is equal to or less than a first threshold value.

According to a fifth example, there is provided the electronic device of the fourth example, wherein the communication circuit is configured to maintain the second tune code of the second antenna and to change the first tune code of the first antenna from a first code set to a second code set when the extension distance of the display exceeds the first threshold value and is equal to or less than a second threshold value.

According to a sixth example, there is provided the electronic device of the fifth example, wherein the communication circuit is configured to change the second tune code of the second antenna from a third code set to the fourth code set when the extension distance of the display exceeds the second threshold value.

According to a seventh example, there is provided the electronic device of any of the first to sixth examples, wherein the first housing part includes a plurality of conductive members and a plurality of non-conductive members arranged between the plurality of conductive members, wherein the first antenna is configured to transmit/receive a wireless signal using a first conductive member among the plurality of conductive members, and the second antenna is configured to transmit/receive a wireless signal using a second conductive member among the plurality of conductive members.

According to an eighth example, there is provided the electronic device of the seventh example, wherein the first conductive member and the second conductive member are arranged on the same side surface of the electronic device.

According to a ninth example, there is provided the electronic device of any of the first to eighth examples, wherein the communication circuit includes a non-volatile storage element, and is configured to store at least one of the first tune code and the second tune code in the non-volatile storage element.

According to a tenth example, there is provided the electronic device of any of the first to ninth examples, wherein the processor is configured to: determine the extension distance of the display based on information obtained through the sensor module, and transmit a control signal related to changing of the first tune code or the second tune code to the communication circuit based on the determined extension distance.

According to an eleventh example, there is provided the electronic device of any of the first to tenth examples, wherein the second housing part is configured to movably engage with the first housing part between a retracted position and an extended position; and wherein the flexible display is coupled to the first housing part and the second housing part so that a size of the display region visible from a front side of the housing changes as the housing moves between the retracted position and the extended position.

According to a twelfth example, there is provided the electronic device of any of the first to eleventh examples, wherein the electronic device comprises an actuator configured to move the second housing part relative to the first housing part.

According to a thirteenth example, there is provided a method of an electronic device comprising a communication circuit and a flexible display having a display region configured to reduce or extend in size in response to relative movement of a first housing part and a second housing part of the electronic device, wherein the method comprises: determine an extension distance of the display when the display region size is reduced or extended; changing, based on the extension distance, a first tune code of a first tuner included in a first antenna configured to perform wireless communication using a first part of a side frame of the first housing part; and changing, based on the extension distance, a second tune code of a second tuner included in a second antenna configured to perform wireless communication using a second part of the side frame of the first housing part; wherein the extension distance at which the first tune code is changed is different to the extension distance at which the second tune code is changed.

According to a fourteenth example, there is provided the method of the thirteenth example, further comprising changing at least one of the first tune code of the first tuner and the second tune code of the second tuner by comparing the extension distance with a length of at least one conductive part among a plurality of conductive parts constituting the side frame.

According to a fifteenth example, there is provided the method of any of the thirteenth or fourteenth examples, wherein each of the first antenna and the second antenna includes an impedance tuner and an aperture tuner, wherein the aperture tuner includes a variable capacitor and a plurality of switches, and wherein the method further comprises changing a state of the variable capacitor and/or the plurality of switches in accordance with a change of the first tune code or the second tune code.

An electronic device according to embodiments and examples disclosed in the present disclosure may prevent deterioration of the performance of an antenna due to a change in a display when operating in a slidable/rollable manner.

An electronic device according to embodiments and examples disclosed in the present disclosure may pre-store two tune codes for each of a plurality of antennas, and may variously set a switching time of the tune code of each of the antennas according to the degree of extension of a display. In this manner, deterioration of the performance of an antenna may be prevented during a slidable/rollable manner-based operation.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 101, 200, 500 comprising:
a housing including a first housing part 210 and a second housing part 240;
a flexible display 160, 250, 505 having a display region configured to reduce or extend in size in response to relative movement of the first housing part 210 and the second housing part 240;
a first antenna configured to perform wireless communication using a first part of a side frame of the first housing part 210;
a second antenna configured to perform wireless communication using a second part of the side frame of the first housing part 210;
a sensor module 176 configured to detect reduction and extension of the display based on the relative movement of the first housing part 210 and the second housing part 240;
a communication circuit 190, 405 configured to transmit/receive a wireless signal through at least one of the first antenna and the second antenna; and
a processor 120 configured to change a first tune code of a first tuner included in the first antenna based on the extension distance of the display 160, 250, 505 and configured to change a second tune code of a second tuner included in the second antenna based on the extension distance of the display 160, 250, 505;
wherein the extension distance at which the first tune code is changed is different to the extension distance at which the second tune code is changed.

2. The electronic device 101, 200, 500 of claim 1, wherein the processor 120 is configured to change at least one of the first tune code of the first tuner and the second tune code of the second tuner by comparing the extension distance with a length of at least one conductive part among a plurality of conductive parts constituting the side frame.

3. The electronic device 101, 200, 500 of any one of claims 1 and 2,
wherein each of the first antenna and the second antenna includes an impedance tuner 420 and an aperture tuner 430, and
wherein the aperture tuner 430 includes a variable capacitor and a plurality of switches, and is configured to change a state of the variable capacitor and/or the plurality of switches in accordance with a change of the first tune code or the second tune code.

4. The electronic device 101, 200, 500 of any one of claims 1 to 3, wherein the communication circuit 190, 405 is configured to maintain a first tune code of the first antenna and the second tune code of the second antenna when the extension distance of the display 160, 250, 505 is equal to or less than a first threshold value.

5. The electronic device 101, 200, 500 of claim 4, wherein the communication circuit 190, 405 is configured to maintain the second tune code of the second antenna and to change the first tune code of the first antenna from a first code set to a second code set when the extension distance of the display 160, 250, 505 exceeds the first threshold value and is equal to or less than a second threshold value.

6. The electronic device 101, 200, 500 of claim 5, wherein the communication circuit 190, 405 is configured to change the second tune code of the second antenna from a third code set to a fourth code set when the extension distance of the display 160, 250, 505 exceeds the second threshold value.

7. The electronic device 101, 200, 500 of any one of claims 1 to 6,
wherein the first housing part 210 includes a plurality of conductive members and a plurality of non-conductive members arranged between the plurality of conductive members,
wherein the first antenna is configured to transmit/receive a wireless signal using a first conductive member among the plurality of conductive members, and
wherein the second antenna is configured to transmit/receive a wireless signal using a second conductive member among the plurality of conductive members.

8. The electronic device 101, 200, 500 of claim 7, wherein the first conductive member and the second conductive member are arranged on the same side surface of the electronic device 101, 200, 500.

9. The electronic device 101, 200, 500 of any one of claims 1 to 8, wherein the communication circuit 190, 405 includes a non-volatile storage element, and is configured to store at least one of the first tune code and second tune code in the non-volatile storage element.

10. The electronic device 101, 200, 500 of any one of claims 1 to 9, wherein the processor 120 is configured to:
determine the extension distance of the display 160, 250, 505 based on information obtained through the sensor module 176, and
transmit a control signal related to changing of the first tune code or the second tune code to the communication circuit 190, 405 based on the determined extension distance.

11. The electronic device 101, 200, 500 of any one of claims 1 to 10, wherein the second housing part 240 is configured to movably engage with the first housing part 210 between a retracted position and an extended position; and
wherein the flexible display 160, 250, 505 is coupled to the first housing part 210 and the second housing part 240 so that a size of the display region visible from a front side of the housing changes as the housing moves between the retracted position and the extended position.

12. The electronic device 101, 200, 500 of any one of claims 1 to 11, wherein the electronic device comprises an actuator configured to move the second housing part relative to the first housing part.

13. A method of an electronic device 101, 200, 500 comprising a communication circuit 190, 405 and a flexible display 160, 250, 505 having a display region configured to reduce or extend in size in response to relative movement of a first housing part 210 and a second housing part 240 of the electronic device 101, 200, 500, wherein the method comprises:
determine an extension distance of the display 160, 250, 505 when the display region size is reduced or extended;
changing, based on the extension distance, a first tune code of a first tuner included in a first antenna configured to perform wireless communication using a first part of a side frame of the first housing part 210; and
changing, based on the extension distance, a second tune code of a second tuner included in a second antenna configured to perform wireless communication using a second part of the side frame of the first housing part 210;
wherein the extension distance at which the first tune code is changed is different to the extension distance at which the second tune code is changed.

14. The method of claim 13, further comprising changing at least one of the first tune code of the first tuner and the second tune code of the second tuner by comparing the extension distance with a length of at least one conductive part among a plurality of conductive parts constituting the side frame.

15. The method of any one of claims 13 and 14,
wherein each of the first antenna and the second antenna includes an impedance tuner 420 and an aperture tuner 430,
wherein the aperture tuner 430 includes a variable capacitor and a plurality of switches, and
wherein the method further comprises changing a state of the variable capacitor and/or the plurality of switches in accordance with a change of the first tune code or the second tune code.
